# EUROPÄISCHE PATENTSCHRIFT

(11) **EP 0 567 065 B1**
(45) Veröffentlichungstag und Bekanntmachung des Hinweises auf die Patenterteilung: **10.09.1997**
(21) Anmeldenummer: 93106377.0
(22) Anmeldetag: 20.04.1993
(51) Int. Cl.: B22C 7/02, B29C 65/48

(54) **Vorrichtung zum Verkleben von Modellteilen**
Apparatus for glueing pattern parts
Appareil pour coller des parties de modèle

(30) Priorität: 22.04.1992 DE 4213169
(43) Veröffentlichungstag der Anmeldung: 27.10.1993
(73) Patentinhaber: Common, Manfred, D-75443 Ötisheim (DE)
(72) Erfinder: Common, Manfred, D-75443 Ötisheim (DE)
(74) Vertreter: Frank, Gerhard, Dipl.-Phys.

(56) Entgegenhaltungen:
- DE-A- 3 917 306
- FR-A- 2 681 002
- PATENT ABSTRACTS OF JAPAN vol. 10, no. 375 (M-545)13. Dezember 1986 & JP-A-61 169 133 (TOYOTA MOTOR CORP) 30. Juli 1986

## Beschreibung

Die Erfindung bezieht sich auf eine Vorrichtung zum Verkleben von Modellteilen nach dem Oberbegriff des Anspruches 1.

Unter einem "vergasbaren, formgeschäumten Modell" im Sinne der Anspruches 1 ist ein verlorenes Gießformmodell zu verstehen, das in einer Vorschäumeeinrichtung mit einer Vorexpansion des als Granulat angelieferten Rohstoffes gefertigt wird und das beispielsweise aus expandierbarem Polystyrol (EPS) oder expandierbarem Polymethylmetaacrylat (PMMA) besteht. Die genannten Stoffe bestehen also aus einem polymeren Kunststoff und einem Treibmittel. Das Treibmittel bewirkt das Aufblähen des Granulates. Vollformgießverfahren unter Benutzung von vorgeschäumten Modellen, die beim Eingießen des flüssigen Metalls vergasen, sind bekannt und werden in der Gießtechnik als 'Lost Foam'-Verfahren bezeichnet.

Zum Entwicklungsstand des Lost-Foam-Verfahrens und der diesbezüglichen Problematik des Verklebens der Modellteile wird auf folgende Literatur verwiesen:
'Gießerei 74', 1987, Nr. 1 12. Januar und
'Gießereitechnik Aktuell', Bd. 4, Stand und Technik des Vollformgießens von Serienteilen, - VGG-Weiterbildung, 1990 - Gießerei-Verlag GmbH, Düsseldorf - ISBN 3-87260-106-7.

Bei der Herstellung von Metallgußteilen im Vollformgießverfahren, z.B. von Gußteilen aus AL-Legierungen, aber auch aus Gußeisen mit Lamellengraphit bzw. mit Kugelgraphit werden bislang in aller Regel zum Verkleben der Modellteile "Heißkleber" eingesetzt, die erhitzt werden und beim raschen Abkühlen entsprechend rasch erhärten und demzufolge kurze Taktzeiten in der Serienfertigung erlauben. Es ist zwar aus der Literatur bekannt, daß zum Zusammenfügen von Modellteilen auch bekannte Polystyrol-Kleber verwendet werden können, doch konnten kalte Kleber dieser Art, im Hinblick auf ihre durch organische Lösungsmittel bedingte schwierige Handhabung bzw. Umweltbelastung in der Serienfertigung bisher keinen Eingang finden.

Es hat sich gezeigt, daß für hohe Qualitätsanforderungen das Zusammenfügen von Modellteilen mit Heißklebern noch nicht vollständig gelöst ist. Die Problematik des Klebens liegt darin, daß die Klebnähte störend wirken können. Wird zuviel Kleber aufgetragen, bildet sich eine Klebstoffwulst; bei Auftrag von zuwenig Kleber oder ungenügendem Zusammenfügen der Klebenähte bildet sich ein Spalt. Eine Nacharbeit der Klebnähte sinngemäß entsprechend dem Entgraten von üblichen Sandkernen ist bei Vollformmodellen z.B. im Inneren von Auspuffkrümmern oder Turbinengehäuse unmöglich oder führt zu unwirtschaftlichem Mehraufwand. Bei Vorhandensein eines Spaltes aber dringt beim Schlichten die Schlichte in den Spalt, am Abguß entsteht eine rißähnliche Vertiefung, welche die Wandstärke vermindert und Rißausgangspunkt sein kann. Grundsätzlich wird also die einmal erzeugte Ausbildung der Klebenähte am Gußstück exakt reproduziert, so daß die Beschaffenheit der Klebenähte über die Verwendbarkeit von Anguß oder auf den Putzaufwand erheblichen Einfluß hat.

In langwierigen Versuchen hat sich gezeigt, daß die oben dargestellten Schwierigkeiten beim Verkleben mit Heißklebern auch bei relativ hohem technischem Aufwand nicht befriedigend zu lösen sind.

Die Erfindung zielt darauf ab, die oben dargelegten Schwierigkeiten zu überwinden, indem die Voraussetzungen für eine 'saubere Klebenaht' am Modell geschaffen werden, welche mit den an die Klebefuge angrenzenden Oberflächen nahezu bündig ist.

Diese Aufgabe wird durch die Markmale des Anspruches 1 gelöst.

Bei Verwirklichung der Merkmalskombination des Anspruchs 1 wird nicht nur ein Abbinden des Klebers im Bereich der Klebefuge erreicht, sondern auch dem Modell selbst verstärkt Restfeuchtigkeit entzogen. Dieser Prozeß wird durch die für Luft begrenzt durchlässige Wandung des formgeschäumten Modells gefördert, so daß Warmluft aus dem Überdruckbereich des Kanals des Modells durch die Wandung des Modells in den Vakuumbereich an dessen Außenseite diffundieren und sich dabei mit Wasserdampf sättigen kann. Das in der äußeren Oberfläche bzw. im Bereich der Lagerflächen der Modellträger herrschende Vakuum ist geeignet, die Modelle bzw. das Modell an die Lagerflächen anzusaugen und dadurch zu fixieren. 'Kalte' Kleber sind aufgrund einer beeinflußbaren Abbindezeit besser steuer- bzw. kontrollierbar. Die Klebenaht kann extrem dünn gestaltet werden. Daher können die Putzarbeiten auf ein Minimum reduziert oder ganz vermieden werden. Das gleiche gilt für die bei hohen Maßhaltigkeitsansprüchen bislang unvermeidbare Ausschußquote. Im übrigen können die Modellträger dank fehlender thermischer Beanspruchung aus Kunststoffen aufgebaut sein.

Bei einer weiteren Ausgestaltung der Erfindung nach Anspruch 2 und 3 wird als Kleber in Wasser dispergierter hochpolymerer Kunststoff z.B. ein Polyacrylat und/oder ein Polyvinylacetat, vorzugsweise ein Acrylsäureester-Styrol-Copolymer verwendet. Als Kunststoff kann aber auch ein Elastomer, also ein synthetischer Kautschuk Verwendung finden. Als Kleber können beispielsweise auch Zweikomponentenkleber oder lösungsmittelhaltige Kleber eingesetzt werden, sofern die dabei entstehenden Dämpfe zuverlässig abgeleitet werden. Trotz des hohen Wassergehaltes der wässrigen Klebedispersionen sind tragbare Taktzeiten in der Größenordnung von 1-2 min. und weniger möglich.

Dispersionen hochpolymerer Stoffe in Wasser haben den Vorteil, daß sie dank einer verlängerten Klebezeit und ihres in weiten Grenzen einstellbaren Viskoseniveaus bei Bildung einer sauberen, relativ dünnen Klebenaht besser beherrschbar sind als Heißkleber. Der aus der Düse austretende Klebestrang ist wesentlich besser steuer- bzw. kontrollierbar. Die genannten Klebedispersionen sind durch entsprechende Zusätze an Netz- und Dispergiermittel (z.B. wasserlöslische Polyphosphate) sowie Verdickungsmitteln und Lösemitteln usw. in höherem Grade an die Einsatzbedingungen zur Optimierung der Klebefuge anpaßbar als bisherige Klebestoffe. Bei einer Verzahnung von Saugnuten und Trocknungsnuten im Sinne des Anspruchs 7 ergeben sich die Trocknung fördernde, gebremste Warmluftströme zwischen den genannten Nuten, die über die Oberfläche des Modells 'kriechen'.

Nachstehend wird ein Ausführungsbeispiel der Erfindung anhand der Zeichnung erläutert.

In der Zeichnung zeigen in schematischer Darstellung:
- Fig. 1: die Vorrichtung im Vertikalschnitt durch eine quer zur Klebefuge verlaufende Ebene des Modells,
- Fig. 2: den unteren Modellträger der Vorrichtung mit zugehörigem Modellteil in Draufsicht sowie
- Fig. 3: die Abwicklung eines Ausschnittes aus der Lagerfläche des Modellträgers mit ineinander verzahnten Saugnuten und Trocknungsnuten.

Die Vorrichtung dient zum Verkleben von Modellteilen 13,14 eines vergasbaren, formgeschäumten Modells M. Modelle dieser Art sind für die Serienfertigung von Metallgußteilen erforderlich, welche im Vollformgießverfahren, auch Lost-Foam Verfahren genannt, hergestellt werden und die je wenigstens einen von einem Medium durchströmbaren Kanal bzw. Hohlraum 20 aufweisen. Als Modellteile werden wenigstens zwei Modellhälften eingesetzt, jedoch können auch mehrere Modellteile ein 'verlorenes' Modell bilden. Die Modellteile 13,14 werden von Modellträgern 10,11 gehaltert. Die Modellteile liegen zur Fixierung an entsprechenden Lagerflächen 10a,11a der Modellträger 10,11 großflächig an. Die Vorrichtung umfaßt eine Einrichtung zum Aufbringen eines pastösen Klebers auf die Klebeflächen eines Modellteils 13 oder 14. Wenigstens einer der beiden Modellträger ist mit einem Antrieb versehen. Dieser dient dem wechselweisen Überführen dieses Modellträgers 10 oder 11 in eine Kleberauftragposition, in welcher sich z.B. zwei Modellhälften in gegenseitigem Abstand befinden, und in eine Klebposition, in welcher die Klebeflächen 13a,14a der Modellhälften mit ausreichendem Anpreßdruck für den Kleber entlang einer Klebefuge 16 eine Klebenaht begrenzen. In Kleberauftragposition liegt der eine Modellträger 10 bzw. 11 mit zugehörigem Modellteil 13 bzw. 14 außerhalb der Vertikalprojektion des anderen Modellträgers 11 bzw. 10 mit dessen Modellteil 14 bzw. 13. In der Kleberauftragposition befinden sich die beiden Modellteile auch in vertikaler Richtung in gegenseitigem Abstand. Sobald die Kleberaupen auf die Klebeflächen des unteren Modellteils aufgetragen sind, wird der Modellträger 10 bzw. 11 mit seinem Modellteil 13 bzw. 14 in horizontaler Richtung in die Vertikalprojektion des anderen Modellträgers 11 bzw. 10 mit Modellteil 14 bzw. 13 verfahren und danach im Zuge einer vertikalen Bewegung in Fügeposition überführt.

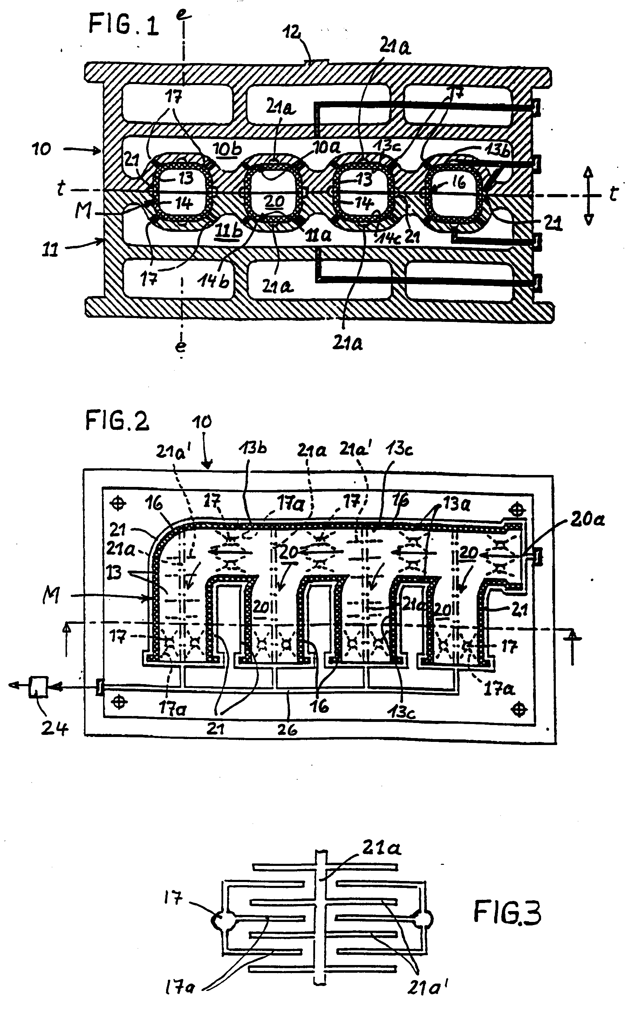

Wie aus den Fign. 1 und 2 ersichtlich, sind die Lagerflächen 10a und 11a für die beiden als Modellhälften ausgebildete Modellteile 13 und 14 durch Wandungen von evakuierbaren Unterdruckkammern gebildet, die je einen Vakuumraum 10b,11b einschließen. Sie sind mit Saugbohrungen 17 versehen, die von den Vakuumräumen 10b,11b ausgehen und an den anliegenden Oberflächen 13b,14b der Modellteile 13,14 münden.

Darüber hinaus umfaßt die Vorrichtung eine Einrichtung zur Applikation von strömender und unter Überdruck stehender Warmluft an innere Oberflächen wie Wandungen 13c,14c und äußere Oberflächen des Modells. Diese Einrichtung weist ein von einer Warmluftquelle ausgehendes Rohrleitungssystem auf, über welches die unter Überdruck stehende Warmluft in den Eingang 20a des Kanals 20 des in Fügeposition befindlichen Modells M eingeleitet wird, um diesen Kanal zu durchströmen. Aus dem Rohrleitungssystem gelangt außerdem Warmluft in zwei die Klebenaht außen je entlang der beiden Klebefugen 16 umschließende Trocknungskanäle 21, die von der Warmluft durchströmt werden und die hälftig in die modellseitigen Wandungen der Modellträger 10,11 eingearbeitet sind.

Die an den Lagerflächen 10a,11a anliegenden Oberflächen des verklebten Modells können wenigstens teilweise über Trocknungsbohrungen mit Warmluft beaufschlagt werden. Diese Trocknungsbohrungen können z.B. je durch eine Bohrung in der Wandung gebogener Rohre und eine korrespondierende Bohrung in der Wandung des zugehörigen Modellträgers 10,11 gebildet sein. Von den Trocknungskanälen 21 können Trocknungsnuten abzweigen, die in den die Lagerflächen 10a,11a bildenden Wandungen der Modellträger 10,11 eingearbeitet sind. Die von den Vakuumräumen 10b,11b ausgehenden Saugbohrungen 17 münden wenigstens teilweise in Saugnuten 17a, die in den Lagerflächen 10a,11a der Modellträger 10,11 eingearbeitet sind. Wie aus Fig. 1 erkennbar, können weitere Trocknungskanäle 21a vorgesehen sein, die in senkrecht zur Ebene der Klebefuge stehenden Ebenen e-e in die Modellträger eingearbeitet sind. Auch von diesen zweigen Trocknungsnuten 21a' ab. Wie aus Figur 3 ersichtlich, können Trocknungsnuten und Saugnuten derart miteinander verzahnt sein, daß ein gewisser Warmluftaustausch zwischen den genannten Nuten stattfinden kann, wobei die Warmluft über die zwischen den Nuten befindliche Oberfläche des Modells, dem Druckgefälle folgend, fließt. Dieses Überfließen der Warmluft ist zwar quantitativ gering, jedoch geeignet, dem Modell Restfeuchtigkeit zu entziehen. Das Vakuum im Unterdruckbehälter kann einen Unterdruck von 0,2-0,8 bar aufweisen. Die Temperatur der Warmluft beträgt im Applikationsbereich zwischen 40 und 80° C. Die gesamten Warmluftströme, welche die inneren und äußeren Oberflächen des Modells M passiert haben und eine hohe relative Luftfeuchtigkeit aufweisen, gelangen über ein Abführrohr 26 in die Atmosphäre, dessen Ausgang mit einem Ventil 24 versehen ist. Zur Steuerung des Überdrucks der Warmluftströme ist der Durchflußquerschnitt des Ventils steuerbar.

Für den Wechsel der Modellträger 10,11 sind Schnellwechsel-Vorrichtungen sowie Schnellkupplungen für die Anschlüsse der die Warmluft zuführenden Rohrleitungen bzw. Rohre um den Anschluß der Vakuumpumpe vorgesehen. In Fig. 1 ist die Trennfuge zwischen den Modellträgern 10, 11 mit t-t und ein Systemraster für ein Schnellwechselsystem mit 12 bezeichnet.

Als Kleber werden keine Heißkleber sondern 'kalte' Kleber wie z.B. wässrige Dispersionen eines Kunststoffes, Zweikomponentenkleber auf Polyurethanbasis oder Kleber auf Lösungsmittelbasis verwendet. Falls dabei störende oder umweltschädliche Dämpfe auftreten, muß gegebenenfalls eine Vorrichtung zum Abführen oder Entsorgen der Dämpfe vorgesehen werden.

## Patentansprüche

1. Vorrichtung zum Verkleben von wenigstens zwei Modellteilen (13;14) eines vergasbaren, formgeschäumten Modells (M) für die Serienfertigung von Metallgußteilen im Vollformgießverfahren, die je wenigstens einen von einem Medium durchströmbaren Kanal bzw. Hohlraum (20) aufweisen,
mit Modellträgern (10,11), welche die Modellteile (13; 14) haltern, welche zur Fixierung an entsprechenden Lagerflächen (10a; 11a) der Modellträger (10,11) großflächig anliegen,
mit einer Auftrageinrichtung zum Aufbringen eines Klebestranges auf Klebeflächen wenigstens eines Modellteils (13 oder 14) mittels einer Düse sowie mit einem Antrieb für wenigstens einen der Modellträger (10; 11) zum wechselweisen Überführen des Modellträgers (10 oder 11) in eine Kleberauftragposition, in welcher sich die Modellteile (13; 14) in gegenseitigem Abstand befinden und in eine Fügeposition, in welcher die Klebeflächen (13a; 14a) der Modellteile (13; 14) mit ausreichendem Anpreßdruck für den Kleber entlang einer Klebefuge (16) eine Klebenaht begrenzen,
dadurch gekennzeichnet, daß die Lagerfläche (10a; 11a) für wenigstens ein Modellteil (13 bzw. 14) durch die Wandung des als evakuierbare Unterdruckkammer mit Vakuumraum (10b; 11b) ausgebildeten Modellträgers (10;11) gebildet und diese Wandung mit Saugbohrungen (17) versehen ist, welche vom Vakuumraum (10b; 11b) ausgehen und an der anliegenden Oberfläche (13b; 14b) des Modellteils (13; 14) münden, wobei eine Einrichtung zur Applikation von strömender Warmluft an die den Kanal (20) des Modells (M) begrenzende Wandung (13c; 14c) sowie an die Außenwand des Modells (M) wenigstens in einem entlang der Klebenaht (16) verlaufenden Bereich vorgesehen ist, und daß der bei der Kleberauftragsposition des Modells (M) aus der Düse der Auftrageinrichtung austretende und bei der Fügeposition zur Klebenaht verformte Klebestrang kein Heißkleber ist.

2. Vorrichtung nach Anspruch 1, dadurch gekennzeichnet, daß der Klebestrang aus der wässrigen Dispersion eines hochpolymeren Kunststoffes wie z.B. Polyacrylat und/oder ein Polyvinylacetat gebildet ist.

3. Vorrichtung nach Anspruch 2, dadurch gekennzeichnet, daß das Polyacrylat ein Acrylsäureester-Styrol-Copolymer ist.

4. Vorrichtung nach einem der Ansprüche 1-3, dadurch gekennzeichnet, daß die Saugbohrungen (17) wenigstens teilweise in Saugnuten (17a) münden, die in den Lagerflächen (10a;11a) des Modellträgers (10;11) eingearbeitet sind.

5. Vorrichtung nach einem der vorhergehenden Ansprüche, dadurch gekennzeichnet, daß die Einrichtung zur Applikation der Warmluft ein von einer Warmluftquelle ausgehendes Rohrleitungssystem umfaßt, über welches unter Überdruck stehende Warmluft in den Eingang (20a) des Kanals (20) des in Klebposition befindlichen Modells (M) sowie in die Klebenaht außen entlang der Klebefugen (16) umschließende Trocknungskanäle (21) einspeisbar ist, welche hälftig in den oberen und unteren Modellträger eingearbeitet sind.

6. Vorrichtung nach Anspruch 5, dadurch gekennzeichnet, daß weitere Trocknungskanäle (21a) vorgesehen sind, die in senkrecht zur Ebene der Klebefuge stehenden Ebenen in die Modellträger (10; 11) eingearbeitet sind, und daß die an den Lagerflächen (10a;11a) anliegende Oberfläche des verklebten Modells wenigstens teilweise über Trocknungsnuten (21a') durch Warmluft beeinflußbar ist, welche Trocknungsnuten (21a') von den weiteren Trocknungskanälen (21a) ausgehen und in die Modellträger (10; 11) eingearbeitet sind.

7. Vorrichtung nach einem der Ansprüche 4-6, dadurch gekennzeichnet, daß Trocknungsnuten (21) und Saugnuten (17a) miteinander verzahnt sind (Fig. 3).

8. Vorrichtung nach einem der vorhergehenden Ansprüche, dadurch gekennzeichnet, daß die unter Überdruck stehende Warmluft über wenigstens ein Abführrohr (26) mittels eines Ventils (24) in die Atmosphäre ableitbar ist, dessen Durchflußquerschnitt steuerbar ist.

9. Vorrichtung nach Anspruch 8, dadurch gekennzeichnet, daß das Vakuum in der Unterdruckkammer einen Unterdruck von 0,2-0,8 bar und die eine Temperatur zwischen 40 und 80° C aufweisende Warmluft einen mit dem Durchflußquerschnitt des Austrittsventils korrespondierenden Überdruck aufweist.

## Claims

1. A device for glueing at least two parts (segments) of a pattern (13; 14) of a gasifiable, shape moulded pattern (M) for the serial production of metal castings by the Full Mould Process, each of them having at least one channel or an hollow space 20, through which a medium will flow; with pattern carriers (10; 11) holding the pattern segments (13; 14) fitting with a large surface to corresponding supporting surfaces (10a; 11a) of the pattern carriers (10; 11) for fixation,
with an application device for the application of a glue string onto the glue surfaces of at least one pattern segment (13 or 14) by means of a nozzle, as well as with a drive for at least one of the pattern carriers (10; 11) for the alternating transfer of the pattern carrier (10 or 11) into a glue application position, in which the pattern segments (13; 14) will be in a reciprocal distance, and into a bonding position, in which the glue surfaces (13a; 14a) of the pattern segments (13; 14) with sufficient pressure against the glue along a glue joint (16) border a glue seam,
characterized by it, that the supporting surface (10a; 11a) is constituted for at least one pattern segment (13 or 14) by the wall of the pattern carrier (10; 11) designed as an evacuable low pressure chamber with a vacuum chamber (10b; 11b), and that this wall is equipped with suction bores (17) starting at the vacuum chamber (10b; 11b) and running into the fitting surface (13b; 14b) of the pattern segment (13; 14), whereby a device for the application of flowing hot-air to the wall (13c; 14c), bordering the channel (20) of the pattern (M), is provided in at least one area running along the glue seam (16), and that the glue string coming out from the nozzle of the application device at the glue application position of the pattern (M), being formed to a glue seam at the bonding position, is no hot-melt glue.

2. A device as per claim 1, characterized by it, that the glue string will be created by the hydrous dispersion of a high-polymeric plastic material, like e.g. polyacrylate and/or polyvinylacetate.

3. A device as per claim 2, charcterized by it, that the polyacrylate is an acrylate-styrene-copolymere.

4. A device as per one of the claims 1 - 3, characterized by it, that the suction bores (17) will run at least in part into suction grooves (17a), which are recessed into the the supporting sufaces (10a; 11a) of the pattern carrier (10; 11).

5. A device as per one of the previous claims, characterized by it, that the device for the application of the hot-air comprises a piping system coming from a hot-air source, through which hot-air under overpressure can be supplied to to the inlet (20a) of the channel (20) of the pattern (M) being at the glueing position, as well as to the drying channels (21) enclosing the glue seam along the outside of the glue joints (16), which are recessed by half into the upper pattern carrier and by half into the lower pattern carrier.

6. A device as per per claim 5, characterized by it, that further drying channels (21a) are provided, which are recessed into the pattern carriers (10; 11) in levels running vertically to the level of the glue joint, and that that the surface of the glued pattern fitting to the supporting surfaces (10a; 11a) may at least be partially effected by hot-air through drying grooves (21a'), which come from the further drying channels (21a) and which are recessed into the pattern carriers (10; 11).

7. A device as per one of the claims 4 - 6, characterized by it, that the drying grooves (21) and the suction grooves (17a) are indented one to each other (fig. 3).

8. A device as per one of the previous claims, characterized by it, that the hot-air being under an overpressure can be dissipated to the atmosphere through at least one outlet pipe (26) by means of a valve (24), the sectional area of flow of which will be controllable.

9. A device as per claim 8, characterized by it, that the vacuum in the low pressure chamber has a negative pressure of 0.2 - 0.8 bar, and the hot-air having a temperature of between 40°C and 80°C shows an overpressure corresponding with the sectional area of flow of the exhaust valve.

## Revendications

1. Un appareil pour le collage au moins de deux éléments de modèle (13; 14) d'un modèle (M) gazéifiable, moulé en forme pour la production de série des pièces coulées métalliques avec le procédé moulage sur modèle consommable qui disposent au moins d'un canal ou d'une cavité (20) traversable par un fluide, avec des porteurs de modèles (10; 11), qui tiennent les éléments du modèle (13; 14), qui sont, pour fixation, contigus à une grande superficie aux surfaces portantes (10a; 11a) des porteurs de modèles (10; 11) correspondantes,
avec une unité d'application pour appliquer un cordon de colle sur des surfaces de collage au moins d'un élément du modèle (13 ou 14) par l'intermédiaire d'une buse, ainsi qu'avec un entraînement pour au moins un des porteurs de modèles (10; 11) pour le transfert alterné du porteur de modèles (10 ou 11) dans une position d'application de colle, dans laquelle se trouvent les éléments du modèle (13; 14) dans une distance réciproque, et dans une position d'assemblage, dans laquelle les surfaces de collage (13a; 14a) des éléments du modèle (13; 14) avec une pression de serrage suffisante pour la colle imitent un joint de collage le long d'un joint collé (16),
caractérisé de manière, que la surface portante (10a; 11a) est constituée pour au moins un élément du modèle (13 ou 14) par la paroi du porteur de modèles (10; 11) construite comme une chambre de sous-pression évacuable avec une chambre à vide (10b; 11b), et que cette paroi est équipée avec des trous d'aspiration (17) sortant de la chambre à vide (10b; 11b) et embouchant dans la surface adjacente (13b; 14b) de l'élément du modèle (13; 14), où une unité pour l'alimentation d'air chaud coulant à la paroi (13c; 14c) limitant le canal (20) du modèle (M) est prévue dans au moins une région le long du joint de collage (16), et que le cordon de colle sortant de la buse de l'unité d'application dans la position d'application de colle du modèle (M), qui est formé dans un joint de collage dans la position d'assemblage, n'est pas une colle pour le thermocollage.

2. Un appareil selon la protection provisoire de brevet no. 1, caractérisé de manière, que le cordon de la colle sera crée par la dispersion hydrosoluble d'une matière plastique haute polymérique, comme p. ex. polyacrilate et/ ou acétate de polyvinyl.

3. Un appareil selon la protection provisoire de brevet no. 2, caractérisé de manière, que le polyacrilate est un copolymère d'ester acrylique-styrène.

4. Un appareil selon les protections provisoires de brevet no. 1 - 3, caractérisé de manière, que les trous d'aspiration (17) embouchent au moins partiellement dans des rainures d'aspiration (17a), qui sont encastrées dans les surfaces portantes (10a; 11a) du porteur de modèles (10; 11).

5. Un appareil selon une des protections provisoires précédantes, caractérisé de manière, que l'unité pour l'alimentation de l'air chaud comporte une tuyauterie venant d'une source d'air chaud, par laquelle l'air chaud en surpression peut être envoyé à l'entrée (20a) du canal (20) du modèle (M) qui se trouve dans la position d'assemblage, ainsi qu'aux canaux de séchage (21) qui encloisonnent le joint de collage le long la face extérieure des joints collés (16) et dont une moitié est encastrèe dans le porteur de modèles supérieur et l'autre moitié est encastrée dans le porteur de modèles inférieur.

6. Un appareil selon la protection provisoire de brevet no. 5, caractérisé de manière, que d'autres canaux de séchage (21a) sont prévus, qui sont encastrés dans les porteurs de modèle (10; 11) dans des niveaus en direction verticale sur le niveau du joint de collage, et que la superficie du modèle collé adjacente aux surfaces portantes (10a; 11a) peut être au moins partiellement influencé par l'air chaud venant par des rainures de séchage (21a'), qui viennent des autres canaux de séchage (21a), et qui sont encastrées dans les porteurs de modèles (10; 11).

7. Un appareil selon un des protections provisoires de brevet no. 4 - 6, caractérisé de manière, que les rainures de séchage (21) et les rainures d'aspiration (17a) sont dentées les unes avec les autres (fig. 3).

8. Un appareil selon une des protections provisoires précédantes, caractérisé de manière, que l'air chaud en surpression peut être évacué dans l'atmosphère par au moins un tuyau d'évacuation (26) par l'intermédiaire d'un clapet (24) dont la section de passage du fluide est contrôlable.

9. Un appareil selon la protection provisoire de brevet no. 8, caractérisé de manière, que le vide dans la chambre de sous-pression a une pression négative de 0.2 - 0.8 bar, et que l'air chaud ayant une température entre 40°C et 80°C dispose d'une surpression correspondant à la section de passage du fluide du clapet de sortie
